# EUROPÄISCHE PATENTSCHRIFT

(11) **EP 1 008 215 B1**
(45) Veröffentlichungstag und Bekanntmachung des Hinweises auf die Patenterteilung: **10.04.2002**
(21) Anmeldenummer: 98951268.6
(22) Anmeldetag: 28.08.1998
(51) Int. Cl.: H02B 1/056

(54) **VERTEILUNGSSYSTEM DER ENERGIETECHNIK MIT EINEM GERÄTEEINSATZ**
POWER ENGINEERING DISTRIBUTION SYSTEM WITH A PLUG-IN UNIT
SYSTEME DE DISTRIBUTION D'ENERGIE AVEC UNE UNITE DEBROCHABLE

(30) Priorität: 29.08.1997 DE 19738705
(43) Veröffentlichungstag der Anmeldung: 14.06.2000
(73) Patentinhaber: SIEMENS AKTIENGESELLSCHAFT, 80333 München (DE)
(72) Erfinder: SCHMIDT, Mario, D-04257 Leipzig (US); GOHLICKE, Kay, D-04157 Leipzig (DE)
(86) Internationale Anmeldenummer: DE9802605
(87) Internationale Veröffentlichungsnummer: WO9912236

(56) Entgegenhaltungen:
- DE-A- 2 115 388
- DE-A- 4 232 841

## Beschreibung

Die Erfindung betrifft ein Verteilungssystem der Energietechnik mit folgenden Merkmalen:
- eine vertikale Feldschienenanordnung mit einem zugehörige Feldschienen aufnehmenden Gehäuse,
- ein Geräteeinsatz mit einer daran angebrachten mehrpoligen Kontaktvorrichtung für den Eingriff mit den Feldschienen,
- eine zu dem Geräteeinsatz gehörende Gerätetragplatte zur Bestückung mit Geräten der Schalt-, Steuer- und Schutztechnik in beliebiger Kombination,
- eine sich parallel zu der Gerätetragplatte erstreckende und in einem Abstand zu der Gerätetragplatte angeordnete Rückwand, und
- ein sich rechtwinklig zu der Gerätetragplatte erstreckender Tragarm zur Abstützung an dem Gehäuse der Feldschienenanordnung.

Ein Verteilungssystem dieser Art ist durch die EP 0 186 556 A1 bekanntgeworden. Der Tragarm und die Gerätetragplatte sind gesonderte Teile, die so ausgebildet sind, daß sie miteinander in unterschiedlichen Positionen verbunden werden können. Auf diese Weise läßt sich die verfügbare Tiefenerstreckung des Geräteeinsatzes an die vorgesehene Bestückung mit Geräten anpassen. Die Kontaktvorrichtung ist an dem Tragarm angebracht und schaltbar ausgebildet, so daß sich der Geräteeinsatz elektrisch spannungslos montieren und demontieren läßt.

Für Verteilungssysteme der Energietechnik ist es ferner bekannt, Gerätekombinationen als Einschübe auszubilden. In den Gerüsten von Schaltanlagen oder Schaltschränken werden hierzu Fachböden vorgesehen, welche die Einschübe aufnehmen. Je nach den Anforderungen an die Sicherheit und die Bequemlichkeit bei der Benutzung werden dabei durch die Fahrbewegung des Einschubes oder bei ruhendem Einschub betätigbare Kontaktvorrichtungen nicht nur für den Anschluß der Hauptstrombahnen der Geräte, sondern auch für deren Hilfsoder Steuerstromkreise vorgesehen. Ein solcher Einschub ist z.B. in der EP 0 681 751 beschrieben. Es handelt sich hierbei um ein hinsichtlich der Montage, der Bedienung, der Sicherheit und der Vielseitigkeit sehr hochwertiges System, das auch für sogenannte Teil- oder. Kleineinschübe unter Verwendung eines Adapters verwendbar ist, wie dies in der DE 43 13 653 A1 beschrieben ist. Ob für ein Verteilungssystem Einschübe dieser Bauart oder Geräteeinsätze der eingangs erwähnten Bauart gewählt werden, hängt gleichfalls von den Bedürfnissen und der Entscheidung des Benutzers ab. Offensichtlich eignen sich aber Geräteeinsätze für solche Anwendungsfälle, in denen Gerätekombinationen für Verbraucher im unteren bis mittleren Leistungsbereich benötigt werden und demzufolge Größe und Gewicht des Geräteeinsatzes beschränkt sind. Im Vergleich zu Voll- oder Teileinschüben ermöglichen Geräteeinsätze eine bedeutende Einsparung von Kosten durch den Wegfall der Fachböden, einer aufwendigen Führung und der Betätigungseinrichtungen für die Kontaktvorrichtungen.

Da Verteilungssysteme der vorliegenden Art vorzugsweise eingesetzt werden, um eine Vielzahl von Verbrauchern zu versorgen, sind dementsprechend bei der Ausrustung einer Schaltanlage zahlreiche Geräteeinsätze zu montieren. Dabei hat es sich erwiesen, daß diese Montage trotz des beschränkten Gewichtes eines einzelnen Geräteeinsatzes eine nicht unbeträchtliche Belastung des Benutzers darstellt, zumal diese Montage teils unter, teils über Kopfhöhe auszuführen ist. Hiervon ausgehend liegt der Erfindung die Aufgabe zugrunde, ein preiswertes und bequem montierbares Verteilungssystem zu schaffen.

Gemäß der Erfindung wird diese Aufgabe durch folgende weitere Merkmale gelöst:
- zur Führung und zum Tragen des Geräteeinsatzes ist eine Tragschiene ortsfest angeordnet,
- der Tragarm ist als Gleitschiene zum Eingriff mit und zur Verschiebung entlang der ortsfesten Tragschiene ausgebildet,
- die Kontaktvorrichtung ist an der Rückwand angeordnet,
- die Rückwand trägt an ihrem dem Tragarm gegenüberliegenden Ende einen Haltebolzen,
- zum Eingriff des Haltebolzens ist ortsfest eine Führungsöffnung angeordnet.

Eine Entlastung des gewichtes wird wirksam, sobald der Haltebolzen in die Führungsöffnung gelangt. Somit hat das neue Verteilungssystem trotz eines im Vergleich zu Einschüben der erläuterten Art recht geringen Aufwandes an Führungsmitteln ähnlich gute Eigenschaften. Vorteilhaft ist aufgrund der rückseitigen Erstreckung des Haltebolzens - im Unterschied zu einer ortsfesten Anordnung etwa bei Geräteeinsätzen nach der DE 1 690 324 A1 - der völlig ungehinderte Zugang zu den am freien Ende der Montageplatte befindlichen Klemmstellen für die zu den Verbrauchern und Steuerstromkreisen führenden Kabel und Leitungen.

Bei einer Aufnahmevorrichtung für Geräteeinheiten der elektrischen Nachrichtentechnik nach der DE 2 115 388 A1 ist es bereits bekannt, zur Abstützung der Geräteeinheiten ortsfeste Tragschienen in Verbindung mit an den Geräteeinheiten angebrachten Tragarmen vorzusehen. Dabei handelt es sich um eine symmetrische Anordnung derart, dass die Tragschienen die Geräteeinheit beidseitig erfassen und somit das gesamte Gewicht der Geräteeinheit aufnehmen. Hinsichtlich der Lastaufnahme ähnelt dies der Unterbringung von Geräteeinheiten in Einschubfächern mit einem zugehörigen Fachboden. Für die im Rahmen der Erfindung betrachtete Bauform steckbarer Geräteeinsätze ist demgegenüber gerade der Wegfall von durchgehenden Fachböden wesentlich. Die DE 2 115 388 A1 gibt keine Anregung, wie energietechnische Geräteeinsätze, die schwerer und breiter sind als nachrichtentechnische Geräteeinsätze, ohne Fachböden abgestützt und leicht gehandhabt werden können.

Ein Verteilungssystem nach der eingangs genannten EP 0 186 556 A1 hat die Eigenschaft, daß es in Schaltanlagen, Gerüste und Schaltschränke beliebiger Art eingebaut werden kann. Dies ist auch bei einem Verteilungssystem nach der Erfindung möglich, wenn nach einer Weiterbildung der Tragarm und die Führungsöffnung an dem Gehäuse der Feldschienenanordnung angebracht sind.

Weitere Vorteile sind dadurch zu erzielen, daß im Rahmen der Erfindung die Rückwand und der Tragarm einen einteiligen L-förmigen Geräteträger bilden und die Gerätetragplatte als ebenes Bauteil ausgebildet und an dem genannten Geräteträger befestigt ist. Hiermit ist kein Verzicht auf die geschilderte Anpassung an die Bautiefe der Geräte verbunden, da sich die Gerätetragplatte in einem gewünschten Abstand zu der Rückwand anbringen läßt. Es wird aber die Möglichkeit geschaffen, unter Beibehaltung des Geräteträgers als Standard-Baugruppe unterschiedliche Gerätetragplatten zu verwenden, d.h. Gerätetragplatten mit einer Systemlochung zur Befestigung unterschiedlicher Gerätesysteme.

Die für die Erfindung wesentliche Verschiebbarkeit eines Geräteeinsatzes ähnlich einem Einschub ist mit einfachen konstruktiven Mitteln und daher kostengünstig zu verwirklichen. Insbesondere kann hierzu der Tragarm des Geräteeinsatzes etwa die gleiche Höhe wie die Rückwand besitzen und an seiner Oberkante mit einem zur Auflage auf der ortsfesten Tragschiene bestimmten rechtwinklig abgekanteten Tragschenkel versehen sein, wobei der Tragschenkel wenigstens zwei eine Verschiebung des Geräteeinsatzes quer zu dem Tragarm begrenzende Führungszapfen trägt. Der Tragarm bleibt dabei an seiner Innenseite frei von Merkmalen oder Einrichtungen, die mit der Verschiebbarkeit oder der Kontaktierung mit der Feldschienenanordnung zusammenhängen. Dieser Umstand kann vorteilhaft in der Weise ausgewertet werden, daß an dem Tragarm eine Anzeige- und Bedieneinheit für die auf dem Geräteeinsatz montierten Geräte angebracht ist.

Es ist daher entbehrlich, eine externe Anzeige- und Bedieneinheit durch biegsame Leitungen mit der Geräteanordnung auf der Gerätetragplatte zu verbinden. Dies wirkt sich günstig auf den Aufbau, die Prüfung und die Zuverlässigkeit des Geräteeinsatzes aus.

Für die Sicherheit des Benutzers ist es erwünscht, daß unmittelbar beim Aufsetzen des Geräteträgers auf die Tragschiene eine leitende Verbindung mit dem Erdpotential zustande kommt. Dies ist ohne Schwierigkeit in bekannter Weise dadurch zu erreichen, daß die Tragschiene und der Geräteträger aus leitfähigem Material, z.B. aus verzinktem Stahlblech, bestehen und daß die Tragschiene durch Verbindung mit dem geerdeten Gehäuse der Feldschienenanordnung das Erdpotential auf den Geräteträger überträgt. Für den Fall besonders hoher Anforderungen an die Sicherheit der Erdung kann zusätzlich nach einer Ausgestaltung der Erfindung der Tragarm mit einer Kontaktfeder zum Bestreichen der ortsfesten Tragschiene zwecks Erdung des Geräteträgers während des Einsetzens in das Verteilungssystem versehen sein.

Die Erfindung wird im folgenden anhand des in den Figuren dargestellten Ausführungsbeispieles näher erläutert.

Die Figur 1 zeigt in einer perspektivischen Darstellung ein Anlagengerüst mit einer Feldschienenanordnung und einem Geräteträger.

In der Figur 2 ist der Geräteträger zur Verdeutlichung von Einzelheiten gesondert in einem gegenüber der Figur 1 vergrößerten Maßstab gleichfalls perspektivisch dargestellt.

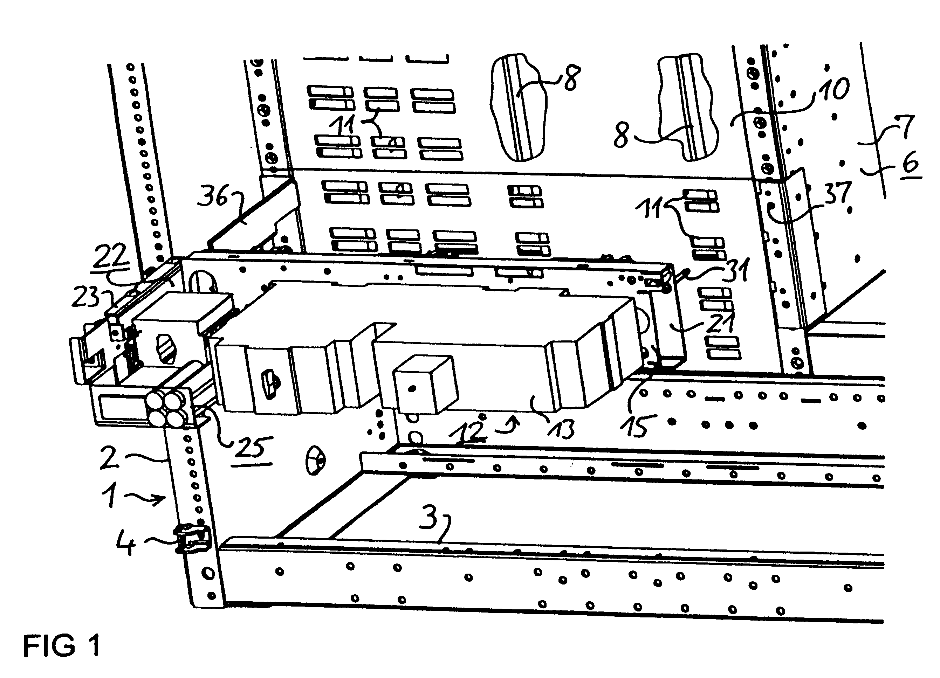

In der Figur 1 ist die -bei frontseitiger Betrachtung- untere linke Ecke eines Gerüstes einer Schaltanlage gezeigt. Die Front des Gerüstes bestimmende Bauteile sind ein vertikales Profilelement 2 und ein unteres horizontales Profilelement 3. Eine das Gerüst 1 frontseitig abschließende Tür ist nicht dargestellt, jedoch ein zugehöriges gerüstfestes Scharnierteil 4, das an dem vertikalen Profilelement 2 angebracht ist. Auf weitere Merkmale des Gerüstes wird im folgenden nur insoweit Bezug genommen, als es zum Verständnis der Erfindung erforderlich ist. Von einer vollständigen Beschreibung des Gerüstes wird im vorliegenden Zusammenhang abgesehen, da einerseits die Erfindung nicht an eine bestimmte Bauart eines Gerüstes gebunden ist und andererseits für die Zwecke der Erfindung geeignete Gerüste in unterschiedlichen Ausführungen bekannt sind.

In dem Gerüst 1 ist eine Feldschienenanordnung 6 abgestützt, die ein Gehäuse 7 und Feldschienen 8 aufweist. Um eine der Feldschienen 8 sichtbar zu machen, ist eine isolierende Abdeckung 10 aufgebrochen dargestellt. Mehrere Abdeckungen 10 sind aneinander anstoßend an dem Gehäuse 7 angebracht. Jede der Abdeckungen weist Stecköffnungen 11 auf, die für den Eingriff von Kontakteinheiten vorgesehen sind, wie noch erläutert wird. Die Feldschienen 8 stehen in nicht dargestellter Weise mit einer Sammelschienenanordnung in Verbindung, die in bekannter Weise im oberen Teil des Gerüstes 1 oder an dessen Rückseite angeordnet sein kann. Ein Beispiel einer solchen Sammelschienenanordnung ist der EP 0 442 591 B1 zu entnehmen.

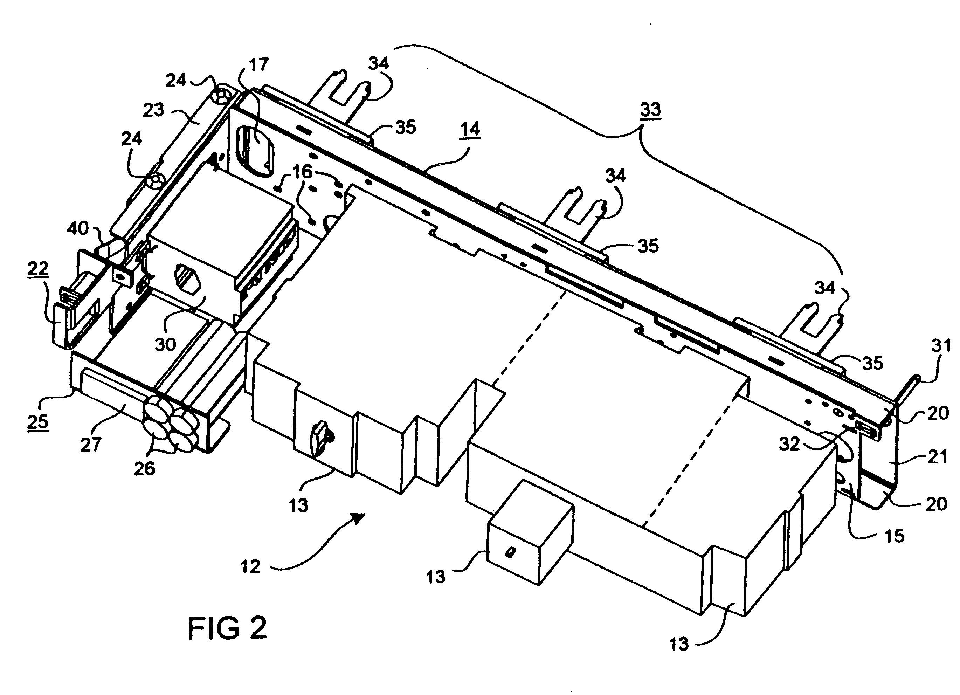

Zu dem Verteilungssystem nach der Erfindung gehören neben der Feldschienenanordnung Geräteeinsätze 12, die mit Geräten 13 der Schalt-, Steuerungs- und Schutztechnik in beliebiger geeigneter Kombination bestückt sein können. Zur Steuerung von Motorantrieben eignet sich beispielsweise eine Kombination von Motorschutzschalter, Schütz und Überlastrelais. Um den Aufbau der Geräteeinsätze näher zu erläutern, wird im folgenden auf die Figur 2 Bezug genommen, die den Geräteeinsatz 12 in einem gegenüber der Figur 1 vergrößerten Maßstab zeigt.

Der Geräteeinsatz 12 weist einen L- oder winkelförmigen Geräteträger 14 und eine daran befestigte Gerätetragplatte 15 auf, auf der die Geräte 13 angeordnet sind. Die Gerätetragplatte 15 ist hierzu mit einer den jeweils zu verwendenden Geräten 13 angepaßten Systemlochung versehen. Einige Befestigungslöcher 16 sind in dem nicht von Geräten 13 bedeckten Teil der Gerätetragplatte 15 in Figur 2 erkennbar. Weitere größere Löcher 17 dienen zur Aufnahme von nicht dargestellten Kabeln und Leitungen, die hinter der Gerätetragplatte 15 in einem Kabelkanal verlegbar sind, der durch die Auflage der Gerätetragplatte 15 auf den Stirnseiten von rechtwinklig nach vorn abgekanteten Randschenkeln 20 einer Rückwand 21 gebildet ist, die den einen Schenkel des L-förmigen Geräteträgers 14 bildet. Rechtwinklig zu der Rückwand 21 erstreckt sich ein Tragarm 22, der als weiterer Schenkel des Geräteträgers 14 ausgebildet ist. Der Tragarm 22 besitzt an seiner Oberkante einen nach außen abgewinkelten Tragschenkel 23 und zwei Führungszapfen 24, die in einer noch zu beschreibenden Weise mit ortsfesten Bauteilen zusammenwirken. Wie näher die Figur 2 zeigt, dient der Tragarm 22 zur Aufnahme von Teilen der Geräteausrüstung des Geräteeinsatzes 12, und zwar insbesondere einer Bedieneinheit 25, die als Kombination von Drucktastern 26 und eines Anzeigeinstrumentes 27 dargestellt ist. Ferner ist an dem Tragarm 22 ein Stromwandler 30 angebracht, der für den Betrieb des erwähnten Überlastrelais und des Anzeigeinstrumentes verwendbar ist.

An seinem dem Tragarm 22 gegenüberliegenden Ende ist der Geräteträger 14 mit einem Haltebolzen 31 versehen, der sich nach hinten erstreckt und in einer gleichfalls noch zu beschreibenden Weise mit ortsfesten Bauteilen zusammenwirkt. Der Führungsstift ist mit der Rückwand 21 verbunden und läßt sowohl den erwähnten Kabelkanal als auch die Gerätetragplatt 15 vollkommen frei. Nahe dem Haltebolzen 31 ist an dem Geräteträger 14 eine verdeckte Befestigungsschraube angeordnet, deren Kopf zur Bedienung durch eine Öffnung 32 der Gerätetragplatte 15 zugänglich ist.

Die Geräte 13 des Geräteeinsatzes 12 sind durch eine dreipolige Kontaktvorrichtung 33 mit der in der Figur 1 gezeigten Feldschienenanordnung 6 verbindbar. Eine besonders geringe Bautiefe der Kontaktvorrichtung 33 wird dadurch erreicht, daß einzelne Kontatkteinheiten 34 vorgesehene sind, die an ebenen Isolierplatten 35 montiert sind. Die Isolierplatten sind ihrerseits an der Rückseite der Rückwand 21 angebracht und lassen daher den Kabelkanal völlig frei. Die Kontakteinheiten 34 sind in dem Beispiel gemäß der Figur 2 gabelartig ausgebildet und können eine beliebige geeignete Bauart aufweisen.

Um das Zusammenwirken des beschriebenen Geräteträgers 12 mit den ortsfesten Teilen des Verteilungssystems zu erläutern, wird nun wieder auf die Figur 1 Bezug genommen. Danach ist an dem Gehäuse 7 der Feldschienenanordnung 6 links eine sich nach vorn erstreckende Tragschiene 36 befestigt, während rechts eine Führungsöffnung 37 angeordnet ist. Um den Geräteeinsatz 12 zu montieren, setzt ihn der Benutzer mit dem Tragschenkel 23 auf die Tragschiene 36, wodurch der Benutzer von rund der Hälfte des Gewichtes des Geräteeinsatzes 12 entlastet ist. Wird nun der Geräteeinsatz 12 in der Richtung der Feldschienenanordnung 6 verschoben, so greifen die Führungszapfen 24 über die Tragschiene 36, so daß nun der Geräteeinsatz 12 von der Tragschiene 36 nicht mehr seitlich abgleiten kann. Dies erleichtert die nachfolgende Ausrichtung des Geräteeinsatzes 12, um den Haltebolzen 31 auf die Führungsöffnung 37 auszurichten. Sobald dies geschehen ist, wird das Gewicht des Geräteeiensatzes 12 von dem Gehäuse 7 aufgenommen, und der Benutzer kann nun den Geräteeinsatz 12 weiter verschieben, um die Kontakteinheiten 34 mit den Feldschienen 8 in Eingriff zu bringen. Anschließend kann der Benutzer die endgültige Befestigung des Geräteeinsatzes 12 mittels der erwähnten verdeckten Befestigungsschrauben vornehmen.

Durch die Tragschiene 36 und den Tragarm 22 wird somit in Verbindung mit dem Haltebolzen 31 und der Führungsöffnung 37 eine Handhabung des Geräteeinsatzes 12 ähnlich einem Einschub erreicht, wobei jedoch die hierzu benötigten Konstruktionsteile wesentlich einfacher sind und daher zu entsprechend geringeren Kosten bereitgestellt werden können. Auch wird der Vorteil erzielt, daß neben der Montagefläche der Gerätetragplatte 15 auch die diesem zugewandte Fläche des Tragarmes 22 vollständig für die Bestückung mit Geräten 13 zur Verfügung steht und somit der Geräteeinsatz 12 als in sich funktionsfähige Einheit gefertigt und geprüft werden kann. Der verbleibende Anschluß der zu einem Verbraucher und zu den Steuerstromkreisen führenden Kabel und Leitungen erfolgt zweckmäßig an der -wie erläutert- ungehindert zugänglichen rechten Seite des Geräteeinsatzes 12. Der relativ große gegenseitige Abstand der Kontakteinheiten 34 führt mit einem entsprechenden Abstand der Feldschienen 8 zu einer vorteilhaft großen Sicherheit gegen Störlichtbögen.

Zur Sicherheit des Benutzers trägt es bei, wenn der Geräteeinsatz geerdet ist, bevor die Kontaktvorrichtung 33 mit den Feldschienen 8 in Eingriff gelangt. Diese Bedingung ist an sich ohne besondere Maßnahmen erfüllt, wenn der Geräteträger 14 in bekannter Weise als blanker metallischer Körper ausgebildet ist und die Tragschiene 36 gleichfalls metallisch und - wie gezeigt - mit dem geerdeten Gehäuse 7 der Feldschienenanordnung 6 verbunden ist. Wird darüber hinaus eine besonders hohe Zuverlässigkeit der Erdung vor der Kontaktierung verlangt, so kann dies durch eine in der Figur 2 gezeigte blattförmige Kontaktfeder 40 erreicht werden, die an dem Tragarm 22 des Geräteeinsatzes 12 befestigt ist. Durch die Kontaktfeder 40 wird eine leitende Verbindung des Geräteeinsatzes 12 mit dem Gerüst 1 bereits hergestellt, wenn der Geräteeinsatz 12 mit der Tragschiene 36 in Berührung gelangt. Dieser Kontakt bleibt auch zuverlässig erhalten, wenn der Geräteeinsatz 12 beim Einfahren verkantet oder ausgerichtet wird.

In der Figur 1 ist zur Vereinfachung der Darstellung nur ein Geräteeinsatz 12 gezeigt. Es ist jedoch leicht erkennbar, daß je nach Bedarf eine beliebige Anzahl von Geräteeinsätzen übereinander in dem Gerüst 1 untergebracht werden kann. Ebenso ist erkennbar, daß es die beschriebene Gestaltung erlaubt, die Geräteeinsätze mit unterschiedlicher Höhe auszuführen, um beispielsweise größere Geräte oder eine größere Anzahl von Geräten auf einem einzelnen Geräteeinsatz unterzubringen. Die Tragschienen 36 und die Führungsöffnungen 37 werden dann in entsprechender Teilung angeordnet.

## Patentansprüche

1. Verteilungssystem der Energietechnik zur Versorgung von Verbrauchern mit folgenden Merkmalen:
- eine vertikale Feldschienenanordnung (6) mit einem zugehörige Feldschienen (8) aufnehmenden Gehäuse (7),
- ein Geräteeinsatz (12) mit einer daran angebrachten mehrpoligen Kontaktvorrichtung (33) für den Eingriff mit der Feldschienen (8),
- eine zu dem Geräteeinsatz (12) gehörende Gerätetragplatte (15) zur Bestückung mit Geräten (13) der Schalt-, Steuer- und Schutztechnik in beliebiger Kombination,
- eine sich parallel zu der Gerätetragplatte (15) erstreckende und in einem Abstand zu der Gerätetragplatte (13) angeordnete Rückwand (21), und
- ein sich rechtwinklig zu der Gerätetragplatte (15) erstreckender Tragarm (22)zur Abstützung an dem Gehäuse (7) der Feldschienenanordnung (6),
**gekennzeichnet durch** folgende weitere Merkmale:
- zur Führung und zum Tragen des Geräteeinsatzes (12) ist eine Tragschiene (36) ortsfest angeordnet,
- der Tragarm (22) ist als Gleitschiene zum Eingriff mit und zur Verschiebung entlang der ortsfesten Tragschiene (36) ausgebildet,
- die Kontaktvorrichtung (33) ist an der Rückwand (21) angeordnet,
- die Rückwand (21) trägt an ihrem dem Tragarm (22) gegenüberliegenden Ende einen Haltebolzen (31), und
- zum Eingriff des Haltebolzens (31) ist ortsfest eine Führungsöffnung (37) angeordnet.

2. Verteilungssystem nach Anspruch 1,
**dadurch gekennzeichnet, daß**
der Tragarm (22) und die Führungsöffnung (37) an dem Gehäuse (7) der Feldschienenanordnung (6) angebracht sind.

3. Verteilungssystem nach Anspruch 1,
**dadurch gekennzeichnet, daß**
die Rückwand (21) und der Tragarm (22) einen einteiligen L-förmigen Geräteträger (14) bilden und die Gerätetragplatte (15) als ebenes Bauteil ausgebildet und an dem genannten Geräteträger (14) befestigt ist.

4. Verteilungssystem nach einem der vorangehenden Ansprüche,
**dadurch gekennzeichnet, daß**
der Tragarm (22) des Geräteeinsatzes (12) die gleiche Höhe wie die Rückwand (21) besitzt und an seiner Oberkante mit einem zur Auflage auf der ortsfesten Tragschiene (36) bestimmten rechtwinklig abgekanteten Tragschenkel (23) versehen ist und daß der Tragschenkel (23) wenigstens zwei eine Verschiebung des Geräteeinsatzes (12) quer zu dem Tragarm (22) begrenzende Führungszapfen (24) trägt.

5. Verteilungssystem nach einem der vorangehenden Ansprüche,
**dadurch gekennzeichnet, daß**
die Kontaktvorrichtung (33) je Pol eine ebene Isolierplatte (35) als Träger einer Kontakteinheit (34) aufweist.

6. Verteilungssystem nach einem der vorangehenden Anprüche,
**dadurch gekennzeichnet, daß**
an dem Tragarm (22) eine Anzeige- und Bedieneinheit (25) für die auf dem Geräteeinsatz (12) montierten Geräte (13) angebracht ist.

7. Verteilungssystem nach einem der vorangehenden Ansprüche,
**dadurch gekennzeichnet, daß**
der Tragarm (22) mit einer Kontaktfeder (40) zum Bestreichen der ortsfesten Tragschiene (36) zwecks Erdung des Geräteträgers (12) während des Einsetzens in das Verteilungssystem versehen ist.

## Claims

1. Power engineering distribution system for supplying consumers with the following features:
- a vertical panel rail arrangement (6) with a housing containing appurtenant panel rails (8),
- a contact block (12) with a multipolar contact device (33) attached thereto for engagement with the panel rails (8),
- a device supporting plate (15) belonging to the contact block (12) for fitting with switching, control and protection technology devices (13) in any combination,
- a rear wall (21) extending parallel to the device supporting plate (15) and arranged at a distance from the device supporting plate (13) and
- a supporting arm (22) extending at right angles to the device supporting plate (15) for support on the housing (7) of the panel rail arrangement (6),
**characterised by** the following further features:
- a supporting rail (36) is arranged as stationary for guiding and supporting the contact block (12),
- the supporting arm (22) is constructed as a sliding rail for engagement with and for displacement along the stationary supporting rail (36),
- the contact device (33) is arranged on the rear wall (21),
- the rear wall (21) carries a retainer bolt (31) on its end opposite the supporting arm (22), and
- a guide orifice (37) is arranged as stationary for engagement of the retainer bolt (31).

2. Distribution system according to claim 1, **characterised in that** the supporting arm (22) and the guide orifice (37) are attached to the housing (7) of the panel rail arrangement (6).

3. Distribution system according to claim 1, **characterised in that** the rear wall (21) and the supporting arm (22) form a one-piece L-shaped device carrier (14) and the device supporting plate (15) is constructed as a flat component and is fastened to the mentioned device carrier (14).

4. Distribution system according to one of the preceding claims, **characterised in that** the supporting arm (22) of the contact block (12) is the same height as the rear wall (21) and is provided on its upper edge with a supporting leg (23), tilted at right angles and designed to rest on the stationary supporting rail (36), and the supporting leg (23) carries at least two guide pegs (24) limiting displacement of the contact block (12) transversely to the supporting arm (22).

5. Distribution system according to one of the preceding claims, **characterised in that** the contact device (33) has one flat insulating plate (35) per pole as carrier of a contact unit (34).

6. Distribution system according to one of the preceding claims, **characterised in that** attached to the supporting arm (22) is a display and control unit (25) for the devices (13) mounted on the contact block (12).

7. Distribution system according to one of the preceding claims, **characterised in that** the supporting arm (22) is provided with a contact spring (40) for rubbing gently against the stationary supporting rail (36) for the purpose of earthing the device carrier (12) during insertion into the distribution system.

## Revendications

1. Système de distribution en génie énergétique pour l'alimentation de récepteurs-consommateurs, présentant les caractéristiques suivantes :
- un agencement (6) vertical de barres de connexion, avec un carter (7) logeant les barres de connexion (8) associées,
- un bloc d'appareillages (12) sur lequel est prévu un dispositif de contact multipolaire (33) destiné à venir en prise avec les barres de connexion (8),
- une plaque de support d'appareillages (15) faisant partie du bloc d'appareillages (12), destinée à être équipée d'appareillages (13) du domaine de la commutation, de la commande et de la protection, selon des combinaisons quelconques,
- une paroi arrière (21) s'étendant parallèlement à la plaque de support d'appareillages (15) et disposée à distance de la plaque de support d'appareillages (15), et
- un bras de support (22) s'étendant perpendiculairement à la plaque de support d'appareillages (15) et destiné à l'appui sur le carter (7) de l'agencement (6) de barres de connexion,
**caractérisé par** les particularités supplémentaires suivantes :
- un rail de support (36) destiné au guidage et au support du bloc d'appareillages (12), est agencé en position fixe,
- le bras de support (22) est réalisé en tant que rail de glissement destiné à venir en prise avec le rail de support (36) et à coulisser le long de ce dernier,
- le dispositif de contact (33) est placé sur la paroi arrière (21),
- la paroi arrière (21), à son extrémité opposée à celle où se trouve le bras de support (22), porte une broche de support (31), et
- une ouverture de guidage (37) est prévue en position fixe pour venir en prise avec la broche de support (31).

2. Système de distribution selon la revendication 1, **caractérisé en ce que** le bras de support (22) et l'ouverture de guidage (37) sont placés sur le carter (7) de l'agencement (6) de barres de connexion.

3. Système de distribution selon la revendication 1, **caractérisé en ce que** la paroi arrière (21) et le bras de support (22) forment un support d'appareillages (14) d'un seul tenant, et la plaque de support d'appareillages (15) est réalisée sous forme de pièce plane et est fixée au support d'appareillages (14) cité.

4. Système de distribution selon l'une des revendications précédentes, **caractérisé en ce que** le bras de support (22) du bloc d'appareillage (12) présente la même hauteur que la paroi arrière (21), et est pourvu sur son bord supérieur, d'une aile de support (23) coudée à angle droit et destinée à venir s'appuyer sur le rail de support (36) en position fixe, et **en ce que** l'aile de support (23) porte au moins deux tenons de guidage (24) limitant le coulissement du bloc d'appareillages (12) transversalement au bras de support (22).

5. Système de distribution selon l'une des revendications précédentes, **caractérisé en ce que** le dispositif de contact (33) présente pour chaque pôle, une plaque isolante (35) plane, en tant que support d'une unité de contact (34).

6. Système de distribution selon l'une des revendications précédentes, **caractérisé en ce que** sur le bras de support (22) est placée une unité d'affichage et de commande de service (25) pour les appareillages (13) montés sur le bloc d'appareillages (12).

7. Système de distribution selon l'une des revendications précédentes, **caractérisé en ce que** le bras de support (22) est muni d'un ressort de contact (40) destiné frotter sur le rail de support (36) en position fixe, en vue d'assurer une mise à la terre du support d'appareillages (14) durant l'insertion dans le système de distribution.
